# FASCICULE DE BREVET EUROPEEN

(11) **EP 3 112 694 B1**
(45) Date de publication et mention de la délivrance du brevet: **13.11.2019**
(21) Numéro de dépôt: 16175334.8
(22) Date de dépôt: 20.06.2016
(51) Int. Cl.: F04D 29/68, F01D 5/14, F01D 5/06, F01D 11/04, F02C 6/08, F01D 11/00, F04D 29/16, F04D 29/54

(54) **TAMBOUR PERFORÉ DE COMPRESSEUR DE TURBOMACHINE AXIALE**
PERFORIERTE TROMMEL EINES KOMPRESSORS EINES AXIALEN TURBOTRIEBWERKS
PERFORATED DRUM OF AN AXIAL TURBINE-ENGINE COMPRESSOR

(30) Priorité: 01.07.2015 BE 201505416
(43) Date de publication de la demande: 04.01.2017
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A1- 1 643 136
- EP-A2- 2 378 070
- FR-A1- 2 892 148
- FR-A1- 2 930 589
- US-A- 4 719 747
- US-A- 4 795 307
- US-A- 5 236 302

## Description

### Domaine technique

L'invention concerne les fuites de recirculation au niveau d'un rotor aubagé de turbomachine axiale. L'invention a également trait à un compresseur de turbomachine axiale. L'invention propose en outre une turbomachine axiale tel un turboréacteur d'avion.

### Technique antérieure

Un compresseur, tout comme une turbine de turbomachine d'avion à réaction, présente une suite de rangées d'aubes. Ces rangées sont tantôt liées au stator, tantôt liées au rotor. La définition des profils de leurs aubes permet de travailler des flux annulaires, en leur faisant subir une compression ou une détente pour récupérer de l'énergie. Le rendement de ces actions mécaniques sur les flux repose sur une gestion des écoulements parasites.

En effet, lors du fonctionnement de la turbomachine, des fuites contournent les rangées d'aubes statoriques. Elles peuvent circuler entre le rotor et la virole interne. Ces recirculations génèrent des pertes par mélange. Elles se traduisent par une diminution du flux effectivement comprimé, et par un engorgement du flux en amont de leur rangée d'aubes statoriques.

L'engorgement peut avoir pour effet de bloquer, de limiter, le débit pouvant être exploité par ladite rangée d'aubes. La réinjection des recirculations, véritables fuites parasites, dégrade l'écoulement au niveau des pieds d'aubes du stator. La stabilité du compresseur s'éloigne alors d'un niveau acceptable. Le comportement thermodynamique s'en retrouve également impacté, en particulier en raison de la création d'entropie.

Afin d'endiguer ces recirculations, ou du moins d'en limiter les effets, il est connu de prévoir des orifices de récupération des recirculations. Les recirculations sont alors interceptées et évacuées via les orifices. Elles quittent le flux primaire qu'elles ne peuvent plus perturber. Le fonctionnement est alors préservé.

Le document EP1643136A1 divulgue un compresseur de turbomachine axiale. Le compresseur présente plusieurs rangées d'aubes fixes dont les extrémités intérieures supportent des viroles internes. Les viroles coopèrent avec des léchettes et présentent des orifices de prélèvement disposés entre les léchettes. Les aubes comportent des cavités intérieures qui forment des conduits de communication entre les orifices de prélèvement et un collecteur extérieur. La pression de fonctionnement du collecteur est inférieure à celle des orifices de prélèvement. Ainsi, un écoulement parasite circulant sous la virole interne peut être aspiré par les orifices de prélèvement, puis être évacué via un collecteur. Cette solution ajoute de l'épaisseur aux aubes afin d'y loger une cavité. Or, les aubes de compresseur basse pression sont généralement fines, par conséquent cette solution n'est pas satisfaisante. Qui plus est, cette configuration génère un surcoût pour loger les cavités.

Le document FR 2 930 589 A1 divulgue un compresseur de turbomachine axiale comprenant un tambour. Le tambour comporte deux rangées annulaires d'aubes entre lesquelles est agencé un dispositif d'étanchéité. Ce dispositif d'étanchéité comporte un jeu de léchettes qui coopèrent avec une virole interne de stator. Un orifice de prélèvement d'air est placé en aval du jeu de léchettes et communique avec un passage annulaire.

### Résumé de l'invention

### Problème technique

L'invention a pour objectif de résoudre au moins un des problèmes posés par l'art antérieur. Plus précisément, l'invention a pour objectif de simplifier la gestion des recirculations dans une turbomachine axiale. L'invention a également pour objectif d'augmenter la capacité d'interception des recirculations.

### Solution technique

L'invention a pour objet un rotor, de turbomachine axiale, notamment un tambour de compresseur de turbomachine axiale, le rotor comprenant : une paroi annulaire externe, qui délimite éventuellement un flux annulaire primaire de la turbomachine, un dispositif d'étanchéité formé sur la paroi, remarquable en ce que la paroi annulaire comprend au moins un orifice d' aspiration de fuite qui est disposé au niveau axialement du dispositif d' étanchéité pour en détourner les fuites de sorte à les évacuer au-delà axialement du rotor.

Selon un mode avantageux de l'invention, la paroi entoure un espace cylindrique ou annulaire qui communique avec le ou les orifices d'aspiration.

Selon un mode avantageux de l'invention, le rotor comprend au moins une rangée annulaire d'aubes rotoriques qui est supportée par la paroi annulaire et qui est disposée en amont d'au moins un orifice et/ou du dispositif d'étanchéité.

Selon un mode avantageux de l'invention, la paroi comprend plusieurs orifices formant au moins une rangée annulaire, préférentiellement plusieurs rangées annulaires, les orifices étant éventuellement répartis angulairement autour de la paroi.

Selon un mode avantageux de l'invention, le rotor comprend des pièces d'équilibrage dynamique pour compenser la présence d'orifice(s).

Selon un mode avantageux de l'invention, la paroi annulaire comprend des ouvertures d'échappement vers l'amont ; qui communiquent éventuellement avec des ajours d'échappement d'un disque de soufflante.

Selon un mode avantageux de l'invention, la paroi comprend un profil de révolution avec une partie s'étendant principalement axialement et/ou une partie s'étendant principalement radialement, par exemple pour former une bride de fixation de disque de soufflante et/ou de fixation à un arbre central, au moins un ou chaque orifice étant disposé au niveau de la partie axiale.

Selon un mode avantageux de l'invention, le dispositif comprend au moins une nervure annulaire radiale, notamment avec une pointe circulaire externe.

Selon un mode avantageux de l'invention, le dispositif comprend au moins un jeu de nervures annulaires radiales destinées à coopérer avec une virole interne, l'orifice étant disposé axialement entre lesdites nervures annulaires, préférentiellement chaque orifice d'aspiration de la paroi externe est disposé axialement entre des nervures annulaires appartenant à un même jeu.

Selon un mode avantageux de l'invention, au moins un ou chaque orifice d'aspiration comprend un élément de perte de charge au travers dudit orifice, l'élément étant préférentiellement un insert.

Selon un mode avantageux de l'invention, le rotor comprend un collecteur d'aspiration de fuite en communication avec au moins un ou chaque ou plusieurs orifices d'aspiration, le collecteur d'aspiration est préférentiellement annulaire.

Selon un mode avantageux de l'invention, le rotor comprend au moins un ou plusieurs voiles annulaires à l'intérieur de la paroi, le ou les voiles annulaires formant au moins un ou plusieurs collecteurs annulaires d' aspiration de fuite en communication avec un ou plusieurs orifices d' aspiration.

Selon un mode avantageux de l'invention, au moins un ou chaque orifice est un est orifice traversant la paroi pour aspirer une fuite de l'extérieur du rotor vers l'intérieur du rotor, et/ou la fuite est évacuée par l'intérieur du rotor.

Selon un mode avantageux de l'invention, le rotor comprend un arbre central, préférentiellement un arbre creux avec un passage en communication avec le ou les orifices, la paroi étant éventuellement fixée audit arbre.

Selon un mode avantageux de l'invention, le rotor comprend plusieurs rangées annulaires d'aubes rotoriques, la paroi présentant une continuité de matière entre lesdites rangées.

Selon un mode avantageux de l'invention, le rotor comprend un disque de support d'aubes de soufflante, ledit disque étant disposé en amont de la paroi annulaire, et présente éventuellement des ajours d'échappement.

Selon un mode avantageux de l'invention, le rotor comprend une rangée annulaire d'aubes rotoriques et/ou une zone annulaire de réception d'aubes rotoriques disposée en amont et/ou à distance d'au moins un orifice ou de chaque orifice.

Selon un mode avantageux de l'invention, le rotor comprend au moins deux zones annulaires de réception d'aubes rotoriques et/ou deux rangées annulaires d'aubes rotoriques, au moins un orifice ou chaque orifice étant disposé entre deux zones annulaires de réception d'aubes rotoriques successives et/ou entre deux rangées annulaires d'aubes rotoriques successives respectivement.

Selon un mode avantageux de l'invention, au moins un ou chaque voile est réalisé en un matériau composite à matrice organique.

Selon un mode avantageux de l'invention, le voile épouse généralement la surface interne de la paroi du rotor, et/ou s'étend axialement sur la majorité de la paroi ou du rotor.

Selon un mode avantageux de l'invention, au moins un ou chaque voile forme un flasque étanche.

Selon un mode avantageux de l'invention, le rotor comprend plusieurs collecteurs d'aspiration de fuites, chacun en communication avec une rangée annulaire d'orifices d'aspiration.

Selon un mode avantageux de l'invention, le rotor comprend plusieurs orifices d'aspiration distants axialement et comprenant des éléments de perte de charge, la perte de charge des éléments étant plus importante pour les éléments en aval qu'en amont.

Selon un mode avantageux de l'invention, au moins un jeu de nervures comprend deux nervures amont et une nervure aval, au moins un orifice ou une rangée d'orifices étant placée axialement entre les nervures amont et la nervure aval d'un jeu.

Selon un mode avantageux de l'invention, le dispositif d'étanchéité est formé par la paroi et/ou est destiné à coopérer avec le stator de manière étanche.

Selon un mode avantageux de l'invention, le rotor comprend un axe de rotation, la paroi annulaire entourant ledit axe de rotation.

L'invention a également pour objet un compresseur de turbomachine axiale, notamment un compresseur basse pression, le compresseur comprenant un rotor, remarquable en ce que le rotor est conforme à l'invention ; le compresseur comprend une rangée annulaire d'aubes statoriques entourant la paroi au niveau d'au moins un orifice d'aspiration ou d'une rangée d'orifices.

Selon un mode avantageux de l'invention, la paroi comprend au moins un orifice d'aspiration de fuite, notamment de fuite par recirculation, au niveau axialement des aubes statoriques, par exemple pour évacuer la fuite hors du compresseur.

Selon un mode avantageux de l'invention, les aubes statoriques de la rangée comprennent chacune un bord d'attaque et un bord de fuite, le ou chaque orifice d'aspiration étant disposé entre le bord d'attaque et le bord de fuite d'une même aube statorique, préférentiellement entre les extrémités internes du bord d'attaque et du bord de fuite d'une même aube statorique.

Selon un mode avantageux de l'invention, le compresseur comprend une virole interne reliée aux extrémités internes des aubes statoriques, le ou chaque ou des orifices d'aspiration étant disposés axialement au niveau de la virole interne.

Selon un mode avantageux de l'invention, la virole interne comprend une couche annulaire de matériau abradable destinée à coopérer par abrasion avec des nervures annulaires du rotor afin d'assurer une étanchéité dynamique.

L'invention a également pour objet un compresseur de turbomachine, notamment de compresseur basse pression de turbomachine axiale, le compresseur comprenant un rotor avec une paroi annulaire, notamment pour supporter une ou plusieurs rangées annulaires d'aubes rotoriques à l'aide plateforme annulaire ou de gorge annulaire de rétention ; une rangée annulaire d'aubes statoriques entourant la paroi annulaire ; remarquable en ce que la paroi comprend au moins un orifice d'aspiration de fuite, notamment de recirculation, au niveau axialement des aubes statoriques, par exemple pour évacuer la fuite hors du compresseur, éventuellement par l'intérieur du rotor.

L'invention a également pour objet une turbomachine, comprenant un rotor et/ou un compresseur, remarquable en ce que le rotor est conforme à l'invention, et/ou le compresseur est conforme à l'invention.

Selon un mode avantageux de l'invention, la turbomachine comprend un arbre creux avec un passage, notamment un arbre central traversant axialement le rotor, au moins un ou plusieurs ou chaque orifice d'aspiration étant en communication avec le passage de l'arbre creux.

Selon un mode avantageux de l'invention, la turbomachine comprend une soufflante avec un cône en amont qui présente une cavité interne, le passage communique avec la cavité interne du cône, la turbomachine étant préférentiellement configurée de sorte à maintenir le cône à la pression de l'environnement de la turbomachine.

Selon un mode avantageux de l'invention, le passage de l'arbre creux débouche à et/ou communique avec l'extérieur de la turbomachine, notamment en aval.

De manière générale, les modes avantageux de chaque objet de l'invention sont également applicables aux autres objets de l'invention. Les différents objets peuvent être entendus comme des interprétations différentes de l'invention. Dans la mesure du possible, chaque objet de l'invention est combinable aux autres objets.

### Avantages apportés

L'implantation des orifices d'aspiration sur le rotor offre davantage d'espace. Le choix du diamètre des orifices étant moins contraint, leur nombre peut être réduit. Le nombre de zones impactées diminue. Le coût du rotor correspondant est alors réduit. L'économie se poursuit car de simples perçages sur le rotor apportent un effet. L'impact sur les formes, les procédés de réalisation des autres composants de la turbomachine est limité ou nul. L'intégration d'insert est également simplifiée.

L'évacuation hors du rotor simplifie son fonctionnement et donc sa conception. L'évacuation des fuites, ou écoulement secondaires, vers l'aval du rotor ne perturbe pas l'écoulement dans la turbomachine. Les couches limites ne sont plus pénalisées et collent mieux à leur paroi. L'entretien s'en retrouve simplifié puisqu'un simple orifice au travers de la paroi suffit à gérer le prélèvement. L'effritement de la couche abradable est moins pénalisant car les orifices sont de géométrie simple. Leur obturation devient moins risquée, tout comme l'obturation du circuit d'échappement des fuites.

### Brève description des dessins

La figure 1 représente une turbomachine axiale selon l'invention.
La figure 2 est un schéma d'un compresseur de turbomachine selon un premier mode de réalisation l'invention.
La figure 3 montre une portion du compresseur l'invention.
La figure 4 présente un élément de perte de charge.
La figure 5 est un schéma d'un compresseur de turbomachine selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine. L'amont et l'aval sont en référence au sens d'écoulement principal du flux dans la turbomachine.

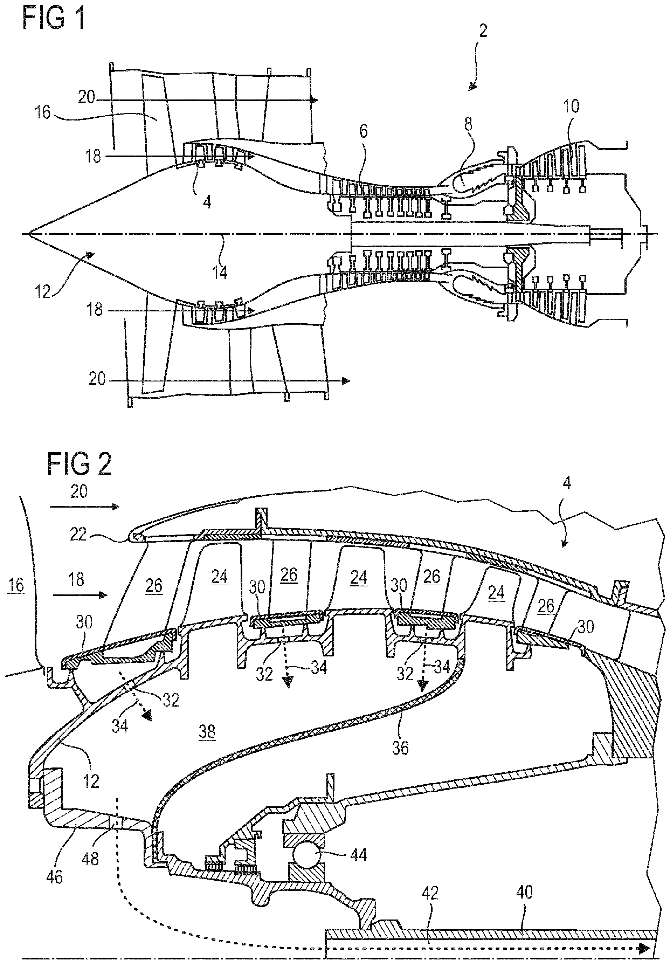

La figure 1 représente de manière simplifiée une turbomachine axiale. Il s'agit dans ce cas précis d'un turboréacteur double-flux permettant de propulser un avion. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer le bec de séparation 22 du flux primaire 18 et du flux secondaire 20. Le rotor 12 est généralement creux et forme un tambour. Il comprend plusieurs rangées d'aubes rotoriques 24, en l'occurrence trois. Les aubes 24 peuvent être soudées sur la paroi annulaire externe 28 du rotor 12, par exemple par soudure orbitale. Elles peuvent alternativement être reçues dans des gorges annulaires de rétention.

Le compresseur 4 comprend plusieurs redresseurs, en l'occurrence quatre, qui contiennent chacun une rangée d'aubes statoriques 26. Ces aubes 26 s'étendent essentiellement radialement. Les redresseurs sont associés au fan 16 ou à une rangée d'aubes rotoriques 24 pour redresser le flux d'air primaire 18, de sorte à convertir la vitesse du flux en pression statique.

Des viroles internes 30 peuvent être reliées aux aubes statoriques en ceinturant le rotor 12. Elles entourent des jeux de nervures annulaires du rotor 12, communément appelées léchettes, qui forment des dispositifs d'étanchéité du rotor 12. En les effleurant, elles permettent des étanchéités dynamiques. Dans, ou au niveau d'au moins un ou de chaque dispositif d'étanchéité, le rotor 12 présente une rangée annulaire d'orifices 32 traversant radialement sa paroi. Ces orifices 32 peuvent être des orifices d'aspiration 32 ou d'évacuation des fuites de recirculation 34 entre le rotor 12 et les viroles internes 30.

Le rotor 12 peut être équipé d'un voile annulaire 36 pour former un collecteur d'aspiration 38 des fuites 34. Le collecteur 38 peut être un espace 38 annulaire ou cylindrique. Le voile 36 sépare les fuites 34 du circuit de ventilation. Le voile 36 peut être essentiellement souple et garder sa forme grâce à la force centrifuge. Il peut être fixé au rotor 12 et à l'arbre central d'entraînement 40 du rotor du compresseur 4, ce qui facilite l'évacuation des fuites 34 au travers du passage axial 42 traversant cet arbre creux 40. L'arbre 40 en question peut traverser axialement la turbomachine et être actionné par la turbine basse pression. Son passage 42 peut présenter un échappement en aval de la turbomachine.

Le voile 36 peut être dimensionné pour contourner des paliers 44, des couvercles d'enceintes de lubrification des paliers, des conduits d'alimentation et/ou de drainage des enceintes de lubrification. Il épouse généralement la paroi 28 du rotor. Le voile 36 peut s'étendre sur la majorité axiale du tambour. En remplacement du voile 36, il est possible d'équiper chaque orifice d'aspiration d'une conduite d'aspiration.

Le rotor 12 du compresseur 4, ou du moins sa partie en tambour, peut être fixé à l'arbre central 40 de la turbomachine, par exemple par l'intermédiaire d'un adaptateur 46. Cet adaptateur 46 peut présenter une ouverture d'échappement 48 pour permettre une communication entre le collecteur 38 et le passage interne 42 de l'arbre 40. L'adaptateur 46 peut également permettre de lier un disque de support des aubes de soufflante 16 à l'arbre central 40 et/ou au compresseur 4. Le voile 36 peut être fixé entre deux tronçons d'adaptateur 46, et en aval du tambour. Une réduction épicycloïdale peut être intercalée.

La paroi 28 du rotor 12 du compresseur peut présenter un profil de révolution. Ce profil peut être généralement courbe. Il peut montrer une partie s'étendant généralement axialement, et une partie s'étendant principalement radialement. La partie axiale reçoit les aubes rotoriques 24 et les orifices d'aspiration 32. La partie radiale peut servir à la fixation du tambour. Elle est liée à l'arbre 40. Elle peut former un intermédiaire entre l'arbre 40, ou du moins son adaptateur 46, et le disque de soufflante 16.

Le rotor 12 peut comprendre des pièces pour son équilibrage dynamique. Ils compensent les hétérogénéités dues à la présence des orifices 32.

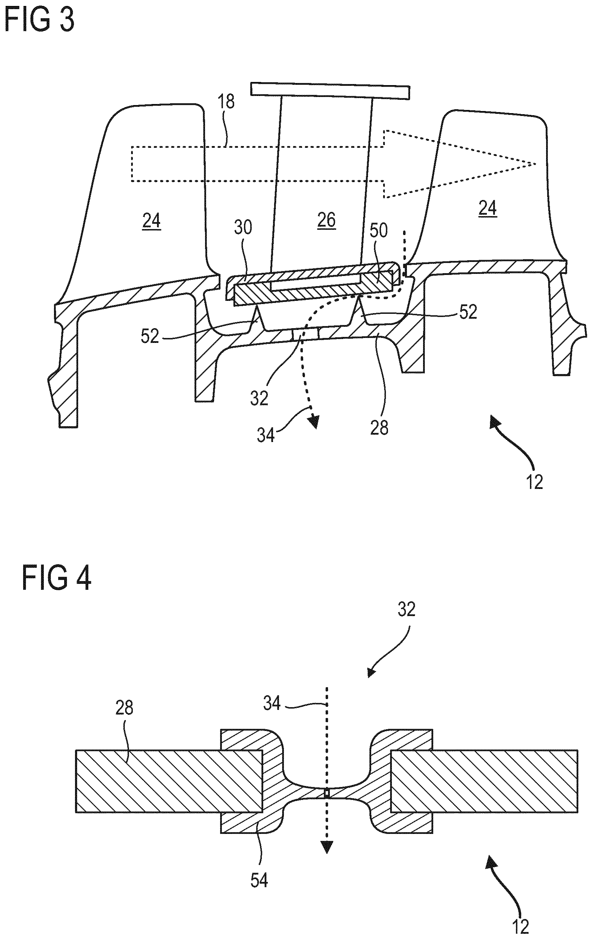

La figure 3 représente une portion de compresseur, par exemple de celui représenté en figure 2. Une aube 26 d'une rangée statorique est disposée entre deux aubes 24 de deux rangées du rotor 12. La portion est traversée par le flux primaire 18 de la turbomachine.

L'aube statorique 26 supporte la virole interne 30 à son extrémité interne. La virole interne 30 permet de délimiter et de guider le flux primaire 18 grâce à sa surface externe. Une couche annulaire 50 formant un joint 50 est appliquée à l'intérieur de la virole. Le joint 50 peut être un joint assurant une étanchéité dynamique, en ce sens que l'étanchéité est améliorée pendant la rotation du rotor 12. Par exemple, la force centrifuge a pour effet d'agrandir le diamètre du rotor 12, et donc de rapprocher les nervures annulaires 52 du joint 50, ce qui referme les jeux annulaires fonctionnels. Les nervures annulaires 52 présentent des extrémités avec des pointes circulaires pour réduire la surface de contact avec le joint.

Les nervures annulaires 52 forment ici un jeu de nervures, dont une amont et une aval. Un orifice 32 est disposé dans ce dispositif d'étanchéité du rotor 12. Il est placé entre les nervures 52, en regard de la couche abradable 50. L'orifice 32 piège et force une fuite de recirculation à être évacuée de la veine primaire. Ce phénomène se produit puisque le flux primaire 18 présente une pression supérieure à l'intérieur du rotor 12. Dans le scénario où un écoulement parasite franchit la nervure aval 52, il est capté par l'orifice 32 par où il s'évacue. Il ne peut plus perturber le flux primaire 18.

Il est envisageable d'ajouter une nervure amont pour y améliorer l'étanchéité. Dès lors, l'orifice peut être entre la nervure aval et les deux nervures amont, de sorte à former une double barrière pour encore mieux favoriser l'évacuation via l'orifice.

La figure 4 esquisse un élément de perte de charge 54 associé à un orifice 32, tels que ceux présentés en figure 2 et/ou 3. La présence d'un élément de perte de charge 54 n'est pas indispensable pour l'homogénéité de l'aspiration en raison de la possibilité de recourir à des conduites dédiées pour récupérer une fuite 34. L'élément de perte de charge 54 peut être tel que les inserts présentés dans le document EP 2 305 960 A1. Il peut être adapté à la force centrifuge qu'il subit.

Au moins un au chaque élément 54 peut être chaussé dans un orifice 32, en étant fixé sur la paroi 28. Plusieurs orifices d'aspiration 32 du rotor 12 peuvent être dotés d'éléments 54 calibrée, ce qui permet de maîtriser l'écoulement de fuite 34 qui les traverse en fonction de la différence de pression locale. Les éléments 54 peuvent avoir des pertes de charges variables. Par exemple, ceux en amont présentent une perte de charge moindre que ceux en aval. L'ensemble peut être configuré pour que le prélèvement des recirculations 32 soit équilibré, homogène sur chaque étage. Cela repose sur la pression de fonctionnement à l'intérieur du rotor 12 et la pression nominale au niveau de chaque étage de compression. Grâce à la configuration des éléments 54, il est possible de collecter des fuites 34 à différentes pression à l'aide d'un même collecteur dans le rotor 12. Malgré la communication entre les orifices 32 à différentes pression, il n'y a pas de risques qu'une fuite aspirée en aval ne revienne dans le flux au niveau d'un orifice amont.

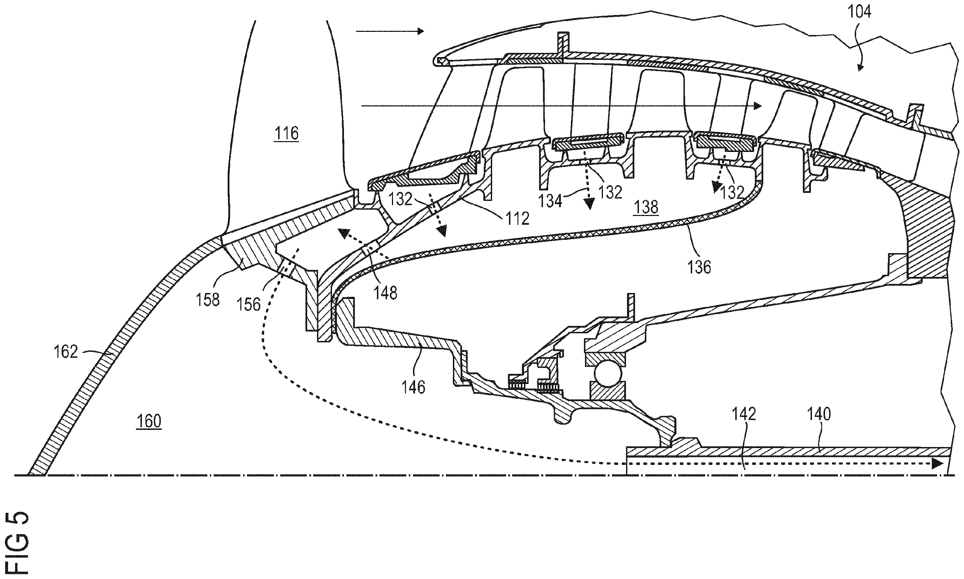

La figure 5 représente un compresseur 104 d'une turbomachine axiale telle que celle de la figure 1, suivant le deuxième mode de réalisation de l'invention. Le compresseur 104 peut présenter une portion telle que représenté en figure 3 et/ou un, préférentiellement plusieurs éléments de perte de charge présentés en relation avec la figure 3. Cette figure 5 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le voile 136 est fixé en amont du rotor 112 du compresseur 104, ce qui allonge le collecteur 138 à l'intérieur de la paroi 128 du rotor 112 du compresseur 104. Le voile 136 balaye l'ensemble des orifices d'aspiration 132. L'échappement depuis collecteur 138 s'effectue à présent vers l'amont grâce à des ouvertures d'échappement 148 vers la soufflante. Ces ouvertures d'échappement 148 sont formées dans la paroi 128 et communiquent avec des ajours d'échappement 156 formés dans le disque support 158 de soufflante 116. Par ces ajours d'échappement 156, les fuites aspirées 134 sont renvoyées à l'intérieur de la soufflante 116, et en particulier dans la cavité interne 160 du cône 162 de soufflante. Puis, elles sont évacuées via le passage 142 de l'arbre central 140. L'adaptateur 146 peut être étanche. Il assure une étanchéité entre l'arbre 140 et le disque 158 de soufflante 116.

## Revendications

1. Rotor (12; 112) de turbomachine axiale (2), notamment un tambour de compresseur (4; 6; 104) de turbomachine axiale, le rotor (12; 112) comprenant :
une paroi annulaire externe (28 ; 128),
un dispositif d'étanchéité formé sur la paroi (28 ; 128),
la paroi annulaire (28 ; 128) comprend au moins un orifice d'aspiration (32 ; 132) de fuite (34; 134) qui est disposé axialement à l'intérieur du dispositif d'étanchéité pour en détourner les fuites (34 ; 134) de sorte à les évacuer au-delà axialement du rotor (12 ; 112),
**caractérisé en ce que**
le dispositif comprend au moins un jeu de nervures annulaires radiales (52) destinées à coopérer avec une virole interne (30), l'orifice (32; 132) étant disposé axialement entre lesdites nervures annulaires (52).

2. Rotor (12; 112) selon la revendication 1, **caractérisé en ce que** la paroi (28 ; 128) entoure un espace cylindrique (38; 138) ou annulaire qui communique avec le ou les orifices d'aspiration (32; 132), et/ou la paroi annulaire (128) comprend des ouvertures d'échappement (148) vers l'amont; qui communiquent éventuellement avec des ajours d'échappement (156) d'un disque (158) de soufflante (116).

3. Rotor (12; 112) selon l'une des revendications 1 à 2, **caractérisé en ce qu'**il comprend au moins une rangée annulaire d'aubes rotoriques (24) qui est supportée par la paroi annulaire (28 ; 128) et qui est disposée en amont d'au moins un orifice (32 ; 132) et/ou du dispositif d'étanchéité.

4. Rotor (12 ; 112) selon l'une des revendications 1 à 3, **caractérisé en ce que** la paroi (28 ; 128) comprend plusieurs orifices (32 ; 132) formant au moins une rangée annulaire, préférentiellement plusieurs rangées annulaires, les orifices (32 ; 132) étant éventuellement répartis angulairement autour de la paroi (28 ; 128).

5. Rotor (12 ; 112) selon l'une des revendications 1 à 4, **caractérisé en ce qu'**il comprend des pièces d'équilibrage dynamique pour compenser la présence d'orifice(s) (32 ; 132).

6. Rotor (12 ; 112) selon l'une des revendications 1 à 5, **caractérisé en ce que** chaque orifice (32 ; 132) d'aspiration de la paroi externe (28 ; 128) est disposé axialement entre des nervures annulaires (52) appartenant à un même jeu.

7. Rotor (12 ; 112) selon l'une des revendications 1 à 6, **caractérisé en ce qu'**au moins un ou chaque orifice d'aspiration (32; 132) comprend un élément de perte de charge (54) au travers dudit orifice (32; 132), l'élément (54) étant préférentiellement un insert.

8. Rotor (12; 112) selon l'une des revendications 1 à 7, **caractérisé en ce qu'**il comprend un collecteur d'aspiration (38; 138) de fuite (34; 134) en communication avec au moins un ou chaque ou plusieurs orifices d'aspiration (32 ; 132), le collecteur d'aspiration (38 ; 138) est préférentiellement annulaire.

9. Compresseur (4; 6; 104) de turbomachine axiale (2), notamment un compresseur basse pression (4), le compresseur (4 ; 6 ; 104) comprenant un rotor (12 ; 112), **caractérisé en ce que** le rotor (12 ; 112) est conforme à l'une des revendications 1 à 8; le compresseur (4; 6; 104) comprend une rangée annulaire d'aubes statoriques (26) entourant la paroi (28 ; 128) au niveau d'au moins un orifice d'aspiration (32 ; 132) ou d'une rangée d'orifices (32 ; 132).

10. Compresseur (4; 6; 104) selon la revendication 9, **caractérisé en ce que** la paroi (28 ; 128) comprend au moins un orifice d'aspiration (32 ; 132) de fuite (34; 134), notamment de fuite (34; 134) par recirculation, au niveau axialement des aubes statoriques (26), par exemple pour évacuer la fuite (34 ; 134) hors du compresseur (4 ; 6 ; 104).

11. Compresseur (4 ; 6 ; 104) selon l'une des revendications 9 à 10, **caractérisé en ce que** les aubes statoriques (26) de la rangée comprennent chacune un bord d'attaque et un bord de fuite, le ou chaque orifice d'aspiration (32 ; 132) étant disposé entre le bord d'attaque et le bord de fuite d'une même aube statorique (26), préférentiellement entre les extrémités internes du bord d'attaque et du bord de fuite d'une même aube statorique (26).

12. Compresseur (4 ; 6 ; 104) selon l'une des revendications 9 à 11, **caractérisé en ce qu'**il comprend une virole interne (30) reliée aux extrémités internes des aubes statoriques (26), le ou chaque ou des orifices d'aspiration (32; 132) étant disposés axialement au niveau de la virole interne (30).

13. Turbomachine (2) comprenant un rotor (12 ; 112) et/ou un compresseur (4; 6 ; 104), **caractérisée en ce que** le rotor (12; 112) est conforme à l'une des revendications 1 à 8, et/ou le compresseur (4 ; 6; 104) est conforme à l'une des revendications 9 à 12.

14. Turbomachine (2) selon la revendication 13, **caractérisée en ce qu'**elle comprend un arbre creux (40; 140) avec un passage (42 ; 142), notamment un arbre central (40; 140) traversant axialement le rotor (12 ; 112), au moins un ou plusieurs ou chaque orifice d'aspiration (32 ; 132) étant en communication avec le passage (42 ; 142) de l'arbre creux (40 ; 140).

15. Turbomachine (2) selon l'une des revendications 13 à 14, **caractérisée en ce qu'**elle comprend une soufflante (16; 116) avec un cône (162) en amont qui présente une cavité interne (160), le passage communique (42; 142) avec la cavité interne (160) du cône (162), la turbomachine (2) étant préférentiellement configurée de sorte à maintenir le cône (162) à la pression de l'environnement de la turbomachine (2).

## Patentansprüche

1. Rotor (12; 112) einer axialen Turbomaschine (2), insbesondere eine Trommel eines Kompressors (4; 6; 104) einer axialen Turbomaschine, wobei der Rotor (12; 112) umfasst:
eine äußere ringförmige Wand (28; 128),
eine auf der Wand (28; 128) ausgebildete Dichtungvorrichtung (28; 128),
wobei die ringförmige Wand (28; 128) mindestens eine Ansaugöffnung (32; 132) für Leckagen (34; 134) umfasst, die axial im Inneren der Dichtungvorrichtung angeordnet sind, um die Leckagen (34; 134) davon abzulenken, um sie axial jenseits von dem Rotor (12; 112) zu evakuieren,
**gekennzeichnet dadurch, dass**
die Vorrichtung mindestens einen Satz radialer ringförmiger Rippen (52) aufweist, die zum Zusammenwirken mit einer inneren Ummantelung (30) bestimmt sind, wobei die Öffnung (32; 132) axial zwischen den besagten ringförmigen Rippen (52) angeordnet ist.

2. Rotor (12; 112) nach Anspruch 1, **dadurch gekennzeichnet, dass** die Wand (28; 128) einen zylindrischen oder ringförmigen Raum (38; 138) umgibt, der mit der oder den Ansaugöffnung(en) (32; 132) in Verbindung steht, und/oder dass die ringförmige Wand (128) stromaufwärtige Entweichungsöffnungen (148) umfasst; welche möglicherweise mit Entweichungdurchbrechungen (156) einer Scheibe (158) eines Lüfters (116) in Verbindung steht.

3. Rotor (12; 112) nach einem der Ansprüche 1 bis 2, **dadurch gekennzeichnet, dass** er mindestens eine ringförmige Reihe von Rotorschaufeln (24) umfasst, die von der ringförmigen Wand (28; 128) getragen ist und die stromaufwärts von mindestens einer Öffnung (32; 132) und/oder der Dichtungvorrichtung angeordnet ist.

4. Rotor (12; 112) nach einem der Ansprüche 1 bis 3, **dadurch gekennzeichnet, dass** die Wand (28; 128) mehrere Öffnungen (32; 132) umfasst, die mindestens eine ringförmige Reihe bilden, vorzugsweise mehrere ringförmige Reihen, wobei die Öffnungen (32; 132) möglicherweise winkelbeanstandet um die Wand (28; 128) herum verteilt sind.

5. Rotor (12; 112) nach einem der Ansprüche 1 bis 4, **dadurch gekennzeichnet, dass** er dynamische Auswuchtteile umfasst, um das Vorhandensein der Öffnung(en) (32; 132) zu kompensieren.

6. Rotor (12; 112) nach einem der Ansprüche 1 bis 5, **dadurch gekennzeichnet, dass** jede Ansaugöffnung (32; 132) der äußeren Wand (28; 128) axial zwischen ringförmigen Rippen (52) angeordnet ist, die zu einem gleichen Satz gehören.

7. Rotor (12; 112) nach einem der Ansprüche 1 bis 6, **dadurch gekennzeichnet, dass** mindestens eine oder jede Ansaugöffnung (32; 132) ein Druckverlustelement (54) durch diese Öffnung (32; 132) hindurch umfasst, wobei das Element (54) vorzugsweise ein Einsatz ist.

8. Rotor (12; 112) nach einem der Ansprüche 1 bis 7, **dadurch gekennzeichnet, dass** er einen Ansaugkollektor (38; 138) für Leckagen (34; 134) umfasst, der mit mindestens einer oder mehreren oder jeder Ansaugöffnung (32; 132) in Verbindung steht, wobei der Ansaugkollektor (38; 138) vorzugsweise ringförmig ist.

9. Kompressor (4; 6; 104) einer axialen Turbomaschine (2), insbesondere eines Niederdruckkompressors (4), wobei der Kompressor (4; 6; 104) einen Rotor (12; 112) umfasst, **dadurch gekennzeichnet, dass** der Rotor (12; 112) gemäß einem der Ansprüche 1 bis 8 ist; wobei der Kompressor (4; 6; 104) eine ringförmige Reihe von Statorschaufeln (26) umfasst, die die Wand (28; 128) an der mindestens einen Ansaugöffnung (32; 132) oder einer Reihe von Öffnungen (32; 132) umgeben.

10. Kompressor (4; 6; 104) nach Anspruch 9, **dadurch gekennzeichnet, dass** die Wand (28; 128) mindestens eine Ansaugöffnung (32; 132) für Leckagen (34; 134), insbesondere für Leckagen (34; 134) durch Rückführung, axial an den Statorschaufeln (26) umfasst, beispielsweise um das Leck (34; 134) außerhalb des Kompressors (4; 6; 104) zu evakuieren.

11. Kompressor (4; 6; 104) nach einem der Ansprüche 9 bis 10, **dadurch gekennzeichnet, dass** die Statorschaufeln (26) der Reihe jeweils eine Vorderkante und eine Hinterkante umfassen, wobei die oder jede Ansaugöffnung (32; 132) zwischen der Vorderkante und der Hinterkante der selben Statorschaufel (26) angeordnet ist, vorzugsweise zwischen den inneren Enden der Vorderkante und der Hinterkante einer selben Statorschaufel (26).

12. Kompressor (4; 6; 104) nach einem der Ansprüche 9 bis 11, **dadurch gekennzeichnet, dass** er ein innere Ummantelung (30) umfasst, die mit den inneren Enden der Statorschaufeln (26) verbunden ist, wobei die oder jede oder einige der Ansaugöffnungen (32; 132) axial an der Position der inneren Ummantelung (30) angeordnet sind.

13. Turbomaschine (2) umfassend einen Rotor (12; 112) und/oder einen Kompressor (4; 6; 104), **dadurch gekennzeichnet, dass** der Rotor (12; 112) gemäß einem der Anspruchs 1 bis 8 ist und/oder dass der Kompressor (4; 6; 104) gemäß einem der Ansprüche 9 bis 12 ist.

14. Turbomaschine (2) nach Anspruch 13, **dadurch gekennzeichnet, dass** er eine Hohlwelle (40; 140) mit einem Durchgang (42; 142) umfasst, insbesondere eine Zentralwelle (40; 140), die axial durch den Rotor (12; 112) durchgeht, wobei mindestens eine oder mehrere oder jede Ansaugöffnung (32; 132) mit dem Durchgang (42; 142) der Hohlwelle (40; 140) in Verbindung ist.

15. Turbomaschine (2) nach einem der Ansprüche 13 bis 14, **dadurch gekennzeichnet, dass** er einen Lüfter (16; 116) mit einem stromaufwärtigen Kegel (162) mit einem inneren Hohlraum (160) umfasst, wobei der Durchgang (42; 142) mit dem inneren Hohlraum (160) des Kegels (162) in Verbindung steht, wobei die Turbomaschine (2) vorzugsweise konfiguriert ist, um den Kegel (162) auf dem Umgebungsdruck der Turbomaschine (2) zu halten.

## Claims

1. Rotor (12; 112) of an axial turbine engine (2), in particular a drum of a compressor (4; 6; 104) of an axial turbine engine, the rotor (12; 112) comprising:
an outer annular wall (28; 128)
a sealing device formed on the wall (28; 128),
the annular wall (28; 128) comprises at least one intake orifice (32; 132) for leakages (34; 134) arranged at the axial position of the sealing device to divert the leakages (34; 134) therefrom so as to evacuate them axially beyond the rotor (12; 112).
**characterized in that**
the device comprises at least one set of radial annular ribs (52) intended to cooperate with an inner shroud (30), the orifice (32; 132) being arranged axially between said annular ribs (52)

2. Rotor (12; 112) according to claim 1, **characterized in that** the wall (28; 128) surrounds a cylindrical or annular space (38; 138) which communicates with the intake orifice(s) (32; 132), and/or the annular wall (128) comprises escape openings (148) directed upstream, which may communicate with escape piercings (156) of a disc (158) of a fan (116).

3. Rotor (12; 112) according to one of claims 1 to 2, **characterized in that** it comprises at least one annular row of rotor vanes (24) which is carried by the annular wall (28; 128) and arranged upstream of at least one orifice (32; 132) and/or the sealing device.

4. Rotor (12; 112) according to any of claims 1 to 3, **characterized in that** the wall (28; 128) comprises several orifices (32; 132) forming at least one annular row, preferably several annular rows, the orifices (32; 132) being in some cases distributed angularly around the wall (28; 128).

5. Rotor (12; 112) according to any of claims 1 to 4, **characterized in that** it comprises dynamic balancing elements to compensate for the presence of the orifice(s) (32; 132).

6. Rotor (12; 112) according to any of claims 1 to 5, **characterized in that** each intake orifice (32; 132) of the outer wall (28; 128) being arranged axially between annular ribs (52) belonging to a same set.

7. Rotor (12; 112) according to any of claims 1 to 6, **characterized in that** at least one or each intake orifice (32; 132) comprises a load loss element (54) through said orifice (32; 132), the element (54) preferably being an insert.

8. Rotor (12; 112) according to any of claims 1 to 7, **characterized in that** it comprises an intake collector (38; 138) for leakages (34; 134) communicating with at least one or each or several intake orifices (32; 132), the intake collector (38; 138) preferably being annular.

9. Compressor (4; 6; 104) of an axial turbine engine (2), in particular a low-pressure compressor (4), the compressor (4; 6; 104) comprising a rotor (12; 112), **characterized in that** the rotor (12; 112) is in accordance with any of claims 1 to 8; the compressor (4; 6; 104) comprises an annular row of stator vanes (26) surrounding the wall (28; 128) at the at least one intake orifice (32; 132) or a row of orifices (32; 132).

10. Compressor (4; 6; 104) according to claim 9, **characterized in that** the wall (28; 128) comprises at least one intake orifice (32; 132) for leakages (34; 134), in particular for leakages (34; 134) by recirculation, at the axial position of the stator vanes (26), for example to evacuate the leakage (34; 134) outside the compressor (4; 6; 104).

11. Compressor (4; 6; 104) according to any of claims 9 to 10, **characterized in that** the stator vanes (26) of the row each comprise a leading edge and a trailing edge, the or each intake orifice (32; 132) being arranged between the leading edge and the trailing edge of a same stator vane (26), preferably between the inner ends of the leading edge and the trailing edge of a same stator vane (26).

12. Compressor (4; 6; 104) according to any of claims 9 to 11, **characterized in that** it comprises an inner shroud (30) connected to the inner ends of the stator vanes (26), the or each or some intake orifices (32; 132) being arranged axially at the position of the inner shroud (30).

13. Turbine engine (2) comprising a rotor (12; 112) and/or a compressor (4; 6; 104), **characterized in that** the rotor (12; 112) is in accordance with any of claims 1 to 8, and/or the compressor (4; 6; 104) is in accordance with any of claims 9 to 12.

14. Turbine engine (2) according to claim 13, **characterized in that** it comprises a hollow shaft (40; 140) with a passage (42; 142), in particular a central shaft (40; 140) passing axially through the rotor (12; 112), at least one or several or each intake orifice (32; 132) being in communication with the passage (42; 142) of the hollow shaft (40; 140).

15. Turbine engine (2) according to one of claims 13 to 14, **characterized in that** it comprises a fan (16; 116) with an upstream cone (162) which has an internal cavity (160), the passage communicates (42; 142) with the internal cavity (160) of the cone (162), the turbine engine (2) being preferably configured so as to keep the cone (162) at the ambient pressure of the turbine engine (2).
